# EUROPÄISCHE PATENTSCHRIFT

(11) **EP 2 798 243 B1**
(45) Veröffentlichungstag und Bekanntmachung des Hinweises auf die Patenterteilung: **21.08.2019**
(21) Anmeldenummer: 12787457.6
(22) Anmeldetag: 20.11.2012
(51) Int. Cl.: F16H 59/02

(54) **VERFAHREN ZUM VERARBEITEN EINER BETÄTIGUNG EINES BEDIENELEMENTS IN EINEM KRAFTFAHRZEUG**
METHOD FOR PROCESSING AN ACTUATION OF AN OPERATING ELEMENT IN A MOTOR VEHICLE
PROCÉDÉ DE TRAITEMENT D'UN ACTIONNEMENT D'UN ÉLÉMENT DE COMMANDE DANS UN VÉHICULE AUTOMOBILE

(30) Priorität: 27.12.2011 DE 102011089980
(43) Veröffentlichungstag der Anmeldung: 05.11.2014
(73) Patentinhaber: Bayerische Motoren Werke Aktiengesellschaft, 80809 München (DE)
(72) Erfinder: LINDNER, Matthias, 82166 Gräfelfing (DE); TILLE, Thomas, 81249 München (DE); RACK, Viktor, 80995 München (DE)
(74) Vertreter: Kammermeier, Peter Frank
(86) Internationale Anmeldenummer: PCT/EP2012/073022
(87) Internationale Veröffentlichungsnummer: WO 2013/097983

(56) Entgegenhaltungen:
- WO-A2-2007/121977
- DE-A1-102008 056 250
- DE-C1- 10 003 140

## Beschreibung

Die Erfindung betrifft ein Verfahren zum Verarbeiten einer Betätigung eines Bedienelements in einem Kraftfahrzeug sowie ein entsprechendes Bedienelement und ein entsprechendes Kraftfahrzeug.

Bei der Betätigung eines Bedienelements in einem Kraftfahrzeug ist es bei sicherheitskritischen Bedienfunktionen oftmals wünschenswert, eine unbeabsichtigte bzw. missbräuchliche Betätigung des Bedienelements, z.B. durch ein Kind auf dem Beifahrersitz, geeignet zu erfassen und in einem solchen Fall die mit der Betätigung des Bedienelements verknüpfte Aktion nicht auszulösen.

Aus dem Stand der Technik ist es bekannt, eine Bedienung eines Bedienelements durch einen Beifahrer über eine aufwändige Beifahrererkennung festzustellen. Die Beifahrererkennung beruht auf optischen Sensoren mit nachgeschalteter Bildverarbeitung, welche ein Bild vom Bereich der Beifahrerposition erfassen und hierüber erkennen, ob sich ein Beifahrer auf der Beifahrerposition befindet und eine Bedienung ausführt.

Aus dem Stand der Technik ist es ferner bekannt, eine unbeabsichtigte Betätigung eines Gangwahlhebels in einem Kraftfahrzeug dadurch zu vermeiden, dass auf der fahrerseitigen Flanke des Gangwahlhebels eine zusätzliche Taste vorgesehen ist, welche beim Wechsel in bestimmte Fahrstufen gedrückt sein muss. Ist dies nicht der Fall, erfolgt kein Einlegen des Gangs bzw. kein Gangwechsel. Eine solche zusätzliche Taste führt zu Komforteinschränkungen bei der Betätigung des Gangwahlhebels. Ferner kann auch nicht ausgeschlossen werden, dass ein Beifahrer die Taste drückt und eine entsprechende Betätigung des Gangwahlhebels auslöst.

Das Dokument DE 100 03 140 C1 offenbart ein Verfahren zur Erkennung eines fahrberechtigten Fahrers mittels an einem Schalthebel angeordneter Sensoren.

Das Dokument WO 2007/121977 A2 offenbart eine Vorrichtung, mit der festgestellt werden kann, ob ein Fahrer oder ein Beifahrer einen Schaltknauf betätigt.

Das Dokument DE 10 2008 056250 A1 offenbart Sensoren an einem Schalthebel zur Ermittlung von Vitalparametern.

Aufgabe der Erfindung ist es deshalb, im Rahmen der Betätigung eines Bedienelements in einem Kraftfahrzeug einfach und zuverlässig festzustellen, ob eine bestimmungsgemäße Betätigung des Bedienelements vorliegt.

Diese Aufgabe wird durch das Verfahren gemäß Patentanspruch 1 bzw. das Bedienelement gemäß Patentanspruch 13 gelöst. Weiterbildungen der Erfindung sind in den abhängigen Ansprüchen definiert.

Das erfindungsgemäße Verfahren dient zum Verarbeiten einer Betätigung eines Bedienelements in einem Kraftfahrzeug, insbesondere in einem PKW und gegebenenfalls auch einem LKW. Das Bedienelement, welches z.B. als Bedienhebel ausgestaltet sein kann, ist dabei zumindest durch den Fahrer des Kraftfahrzeugs betätigbar. An dem Bedienelement ist eine Mehrzahl von Sensoren angeordnet, welche zumindest teilweise bei einer Betätigung des Bedienelements aktiviert wird. Eine Aktivierung eines Sensors liegt dabei dann vor, wenn der Sensor ein entsprechendes Signal sensiert, dessen Stärke in der Regel eine vorbestimmte Schwelle überschreiten muss. Gegebenenfalls kann die Aktivierung auch daran gekoppelt sein, dass das sensierte Signal zumindest eine vorbestimmte Zeit vorliegt, um hierdurch detektierte Signale, die nicht durch eine Betätigung des Bedienelements verursacht sind, unberücksichtigt zu lassen.

Im Rahmen des erfindungsgemäßen Verfahrens wird die zeitliche Reihenfolge der Aktivierung der Sensoren bei der Betätigung des Bedienelements erfasst und basierend auf der zeitlichen Reihenfolge bestimmt, ob eine unerwünschte Betätigung vorliegt, wobei unerwünschte Betätigungen unbeabsichtigte Betätigungen und/oder Betätigungen durch einen Beifahrer umfassen. Falls eine unerwünschte Betätigung vorliegt, wird die Ausführung von einer oder mehreren, an die Betätigung des Bedienelements gekoppelten Aktionen im Kraftfahrzeug blockiert. Der Begriff der zeitlichen Reihenfolge der Aktivierung der Sensoren impliziert auch die Anzahl der in der zeitlichen Reihenfolge aktivierten Sensoren. Diese Anzahl kann gegebenenfalls bei der Bestimmung, ob eine unerwünschte Betätigung vorliegt, berücksichtigt werden.

Das erfindungsgemäße Verfahren beruht auf der Erkenntnis, dass bei einer geeigneten Positionierung von Sensoren am Bedienelement das sich bei dessen Betätigung ergebende Aktivierungsmuster der Sensoren einen Aufschluss dahingehend zulässt, ob es sich um eine bestimmungsgemäße Betätigung oder um eine nicht bestimmungsgemäße Betätigung in der Form einer unbeabsichtigten Betätigung bzw. einer Betätigung durch einen Beifahrer handelt. Es kann somit auf einfache Weise eine sicherheitskritische Betätigung Bedienelements durch am Bedienelement angebrachte Sensoren erfasst werden, ohne dass hierfür eine aufwändige optische Erkennung erforderlich ist. Ebenso kann gegebenenfalls auf eine zusätzliche Taste verzichtet werden, welche im Rahmen der Betätigung des Bedienelements durch den Benutzer gedrückt werden muss und den Bedienkomfort einschränkt. Die Betätigung des Bedienelements erfolgt dabei vorzugsweise über die Hand des Benutzers, die bei der Betätigung das Bedienelement berührt.

In einer besonders bevorzugten Ausführungsform umfassen die Sensoren einen oder mehrere Annäherungssensoren und insbesondere einen oder mehrere kostengünstige kapazitive Sensoren. Vorzugsweise sind alle Sensoren der Mehrzahl von Sensoren Annäherungssensoren. Über solche Sensoren kann auf einfache Weise eine entsprechende Annäherung bzw. Berührung des Bedienelements erfasst werden, wobei die Reihenfolge der Berührung Aufschluss darüber gibt, ob die entsprechende Betätigung eine erwünschte Betätigung ist.

Im erfindungsgemäßen Verfahren kann die Anzahl der Sensoren, die an dem Bedienelement vorgesehen sind, variieren. In einer bevorzugten Ausführungsform sind zumindest vier Sensoren an dem Bedienelement angeordnet, so dass eine zuverlässige Unterscheidung von erwünschten und unerwünschten Betätigungen erreicht wird.

Es sind verschiedene Ausgestaltungen möglich, gemäß denen entsprechende Aktivierungsreihenfolgen der Sensoren an unerwünschte Betätigungen des Bedienelements gekoppelt sind. In einer einfachen Ausführungsform der Erfindung stellt eine Betätigung, bei der die Anzahl der aktivierten Sensoren geringer als eine Mindestanzahl ist, eine unerwünschte Betätigung dar, welche in der Regel auf eine unbeabsichtigte Betätigung schließen lässt.

In einer besonders bevorzugten Ausführungsform der Erfindung wird das Verfahren für einen Bedienhebel eingesetzt, der zwischen Fahrerposition und Beifahrerposition angeordnet ist und insbesondere einen Gangwahlhebel darstellt, an dessen Betätigung der Wechsel eines Gangs oder Fahrmodus gekoppelt ist. Der Begriff des Gangwahlhebels ist dabei weit zu verstehen und umfasst insbesondere auch den Wahlhebel für ein Automatikgetriebe.

Wird das erfindungsgemäße Verfahren für den soeben beschriebenen Bedienhebel zwischen Fahrerposition und Beifahrerposition eingesetzt, umfasst die Mehrzahl von Sensoren in einer besonders bevorzugten Ausführungsform folgende Sensoren:
- einen oder mehrere erste Sensoren an einer fahrerseitigen Flanke des Bedienhebels;
- einen oder mehrere zweite Sensoren an einer beifahrerseitigen Flanke des Bedienhebels;
- einen oder mehrere dritte Sensoren an einer mittleren Flanke des Bedienhebels, welche zwischen der fahrerseitigen Flanke und der beifahrerseitigen Flanke verläuft, wobei die mittlere Flanke vorzugsweise eine aus der Fahrerposition verdeckte Rückseite des Bedienhebels darstellt.

Mit einer derartigen Sensoranordnung können sehr gut Umgreifbewegungen der Hand des Benutzers um den Bedienhebel bzw. den Gangwahlhebel über die Aktivierungsreihenfolge der Sensoren erfasst werden. Insbesondere stellt eine zeitliche Reihenfolge der Aktivierung der Sensoren, gemäß der zuerst zumindest ein zweiter Sensor, anschließend zumindest ein erster Sensor und schließlich zumindest ein dritter Sensor aktiviert wird, eine ungewünschte Betätigung dar, welche in der Regel darauf schließen lässt, dass der Bedienhebel nicht durch den Fahrer, sondern durch den Beifahrer im Rahmen der Umgreifbewegung berührt wird.

In einer weiteren Ausführungsform stellt eine zeitliche Reihenfolge der Aktivierung der Sensoren, gemäß der kein dritter Sensor aktiviert wird oder gemäß der ausschließlich zumindest ein erster Sensor oder zumindest ein zweiter Sensor oder zumindest ein dritter Sensor aktiviert wird, eine unerwünschte Betätigung dar. Diese Betätigungen lassen in der Regel darauf schließen, dass keine bestimmungsgemäße Umgreifbewegung des Bedienhebels durchgeführt wird, sondern eine missbräuchliche bzw. unbeabsichtigte Betätigung des Bedienhebels vorliegt.

In einer weiteren Ausführungsform der Erfindung wird bei der Bestimmung, ob eine unerwünschte Betätigung vorliegt, die erfasste zeitliche Reihenfolge der Aktivierung der Sensoren mit einer Mehrzahl von gespeicherten zeitlichen Reihenfolgen der Aktivierung von Sensoren verglichen, wobei die gespeicherten zeitlichen Reihenfolgen in unerwünschte und erlaubte Betätigungen klassifiziert sind. Basierend auf diesem Vergleich wird dann die erfasste zeitliche Reihenfolge als unerwünschte Betätigung oder erlaubte Betätigung eingestuft. Im Falle einer erlaubten Betätigung wird dabei die an die Betätigung geknüpfte Aktion bzw. geknüpften Aktionen ausgeführt und nicht blockiert. Mit einer derartigen Variante der Erfindung wird eine besonders feine Klassifikation der Betätigungen durch Verwendung einer großen Anzahl an vorab gespeicherten Aktivierungsreihenfolgen ermöglicht und somit eine besonders zuverlässige Erkennung von unerwünschten Betätigungen erreicht.

In einer weiteren Ausführungsform des erfindungsgemäßen Verfahrens wird ein Ende einer zeitlichen Reihenfolge der Aktivierung der Sensoren dann festgestellt, wenn die Aktivierung eines im Rahmen der Betätigung aktivierten Sensors beendet wird. Hierüber kann darauf geschlossen werden, dass das entsprechende Bedienelement durch den Benutzer losgelassen wird und somit der Betätigungsvorgang abgeschlossen ist.

Neben dem oben beschriebenen Verfahren betrifft die Erfindung ferner ein Bedienelement für ein Kraftfahrzeug, insbesondere einen Bedienhebel, wobei das Bedienelement zumindest durch den Fahrer des Kraftfahrzeugs betätigbar ist und an dem Bedienelement eine Mehrzahl von Sensoren angeordnet ist, welche zumindest teilweise bei der Betätigung des Bedienelements aktiviert werden. Das Bedienelement umfasst eine Einrichtung zum Verarbeiten einer Betätigung des Bedienelements, welche derart ausgestaltet ist, dass die zeitliche Reihenfolge der Aktivierung der Sensoren bei der Betätigung des Bedienelements erfasst wird und basierend auf der zeitlichen Reihenfolge bestimmt wird, ob eine unerwünschte Betätigung vorliegt, wobei unerwünschte Betätigungen unbeabsichtigte Betätigungen und/oder Betätigungen durch einen Beifahrer umfassen. Im Falle einer solchen unerwünschten Betätigung wird die Ausführung von einer oder mehreren, an die Betätigung des Bedienelements gekoppelten Aktionen im Kraftfahrzeug blockiert.

Das Bedienelement ist dabei vorzugsweise derart ausgestaltet, dass eine oder mehrere der bevorzugten Ausführungsformen des erfindungsgemäßen Verfahrens mit dem Bedienelement durchführbar sind.

Die Erfindung betrifft darüber hinaus ein Kraftfahrzeug, welches das oben beschriebene Bedienelement umfasst.

Ausführungsbeispiele der Erfindung werden nachfolgend anhand der beigefügten Figuren detailliert beschrieben.

Es zeigen:
- Fig. 1: Seitenansichten einer Ausführungsform eines erfindungsgemäßen Bedienhebels,
- Fig. 2: die Vorder- und Rückansicht des Bedienhebels der Fig. 1, und
- Fig. 3: ein Baudiagramm, welches alle erfassbaren Aktivierungsreihenfolgen der in dem Bedienelement der Fig. 1 bzw. Fig. 2 verbauten Sensoren wiedergibt.

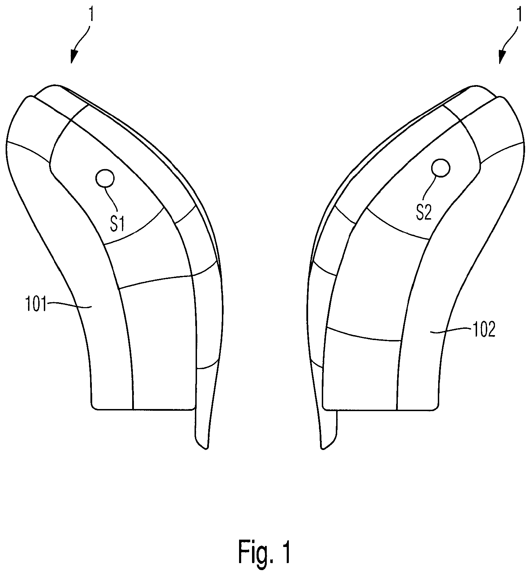

Nachfolgend wird die Erfindung basierend auf einem Bedienelement in der Form eines Automatik-Gangwahlhebels in der Mittelkonsole eines Kraftfahrzeugs beschrieben. Fig. 1 zeigt die Seitenansichten eines solchen Gangwahlhebels 1, der in einem Linkslenker-Fahrzeug integriert ist. Die linke Seitenansicht zeigt dabei die fahrerseitige Flanke 101 des Gangwahlhebels und die rechte Ansicht die beifahrerseitige Flanke 102 des Gangwahlhebels. Man erkennt, dass in der fahrerseitigen Flanke 101 ein im oberen Bereich der Flanke angeordneter Sensor S1 und in der beifahrerseitigen Flanke 102 ein im oberen Bereich der Flanke angeordneter Sensor S2 vorgesehen ist. In der Ausführungsform der Fig. 1 sind diese Sensoren Annäherungssensoren in der Form von kapazitiven Sensoren, mit denen in geeigneter Weise die Berührung des Gangwahlhebels an der Stelle der Sensoren erfasst werden kann. Demzufolge wird ein Sensor bei Berührung des Gangwahlhebels an der Sensorposition aktiviert, wobei die Aktivierung gegebenenfalls erst dann erfolgt, wenn ein entsprechendes Sensorsignal über eine vorbestimmte Zeitspanne hinweg erfasst wird. Auf diese Weise bleiben nur sehr kurzzeitige Berührungen, die nicht im Zusammenhang mit der Betätigung des Gangwahlhebels stehen, bei der Auswertung der Sensorsignale unberücksichtigt.

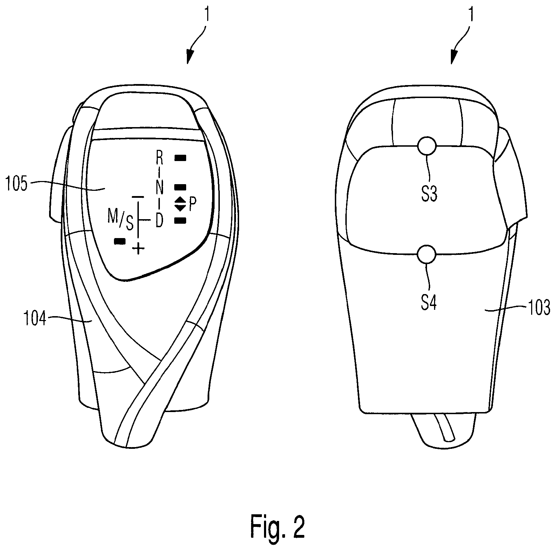

Fig. 2 zeigt die Vorderansicht und die Rückansicht des Gangwahlhebels der Fig. 1. Im linken Teil der Fig. 2 ist dabei die Vorderseite 104 des Gangwahlhebels 1 wiedergegeben, in der ein Anzeigebereich 105 vorgesehen ist, auf dem dem Fahrer über geeignete Buchstaben in an sich bekannter Weise die wählbaren Gänge bzw. Fahrmodi angezeigt werden. "R" steht für Rückwärtsgang, "N" für Neutralstellung, "D" für Vorwärtsgang, "M/S" für Sportmodus und "P" für Parken. Je nach gewähltem Gang bzw. Fahrmodus leuchtet ein entsprechender Balken neben dem Buchstaben auf. Im rechten Teil der Fig. 2 erkennt man, dass auf der Rückseite 103 des Gangwahlhebels wiederum zwei kapazitive Sensoren S3 und S4 angebracht sind, die entlang der Längsachse des Gangwahlhebels positioniert sind, wobei der Sensor S3 im oberen Bereich des Gangwahlhebels und der Sensor S4 im mittleren Bereich des Gangwahlhebels vorgesehen sind.

Basierend auf den vier Sensoren S1 bis S4 des soeben beschriebenen Gangwahlhebels 1 können in der hier beschriebenen Ausführungsform nunmehr vom Fahrer beabsichtigte Betätigungen des Gangwahlhebels von unbeabsichtigten Betätigungen bzw. Betätigungen des Beifahrers unterschieden werden. Um dies zu erreichen, wird im Falle der Betätigung des Gangwahlhebels, d.h. immer dann, wenn der Gangwahlhebel durch Schieben oder Ziehen ausgelöst wird, die damit verknüpfte zeitliche Reihenfolge der Aktivierung der Sensoren S1 bis S4 erfasst. Basierend darauf wird dann in geeigneter Weise abgeleitet, ob die Betätigung durch den Fahrer unbeabsichtigt ist bzw. vom Beifahrer durchgeführt wurde. Ist dies der Fall, wird die an die Betätigung des Gangwahlhebels geknüpfte Aktion, d.h. das Umschalten des entsprechenden Gangs, nicht durchgeführt. Dabei kann die Auswertung der Aktivierungsreihenfolge gegebenenfalls nur beim Einlegen bestimmter Gänge berücksichtigt werden. Insbesondere kann die Auswertung nur dann erfolgen, wenn ein Umschalten vom Parkzustand P bzw. vom Neutralzustand N in den Fahrzustand D bzw. den Rückwärtsgang R erfolgt, denn dieses Umschalten kann zum Losfahren des Fahrzeugs führen und ist somit sicherheitskritisch.

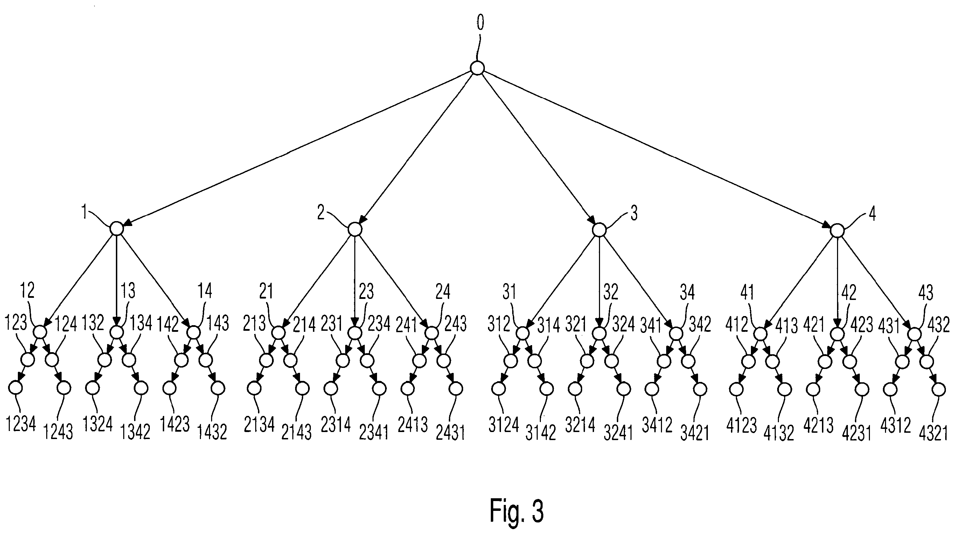

Bei der Verwendung der vier Sensoren S1 bis S4 können sich insgesamt 64 zeitliche Reihenfolgen der Aktivierung der Sensoren ergeben. Diese zeitlichen Reihenfolgen werden im Folgenden auch als Aktivierungsmuster bezeichnet. Die Aktivierungsmuster unterscheiden sich in der Reihenfolge bzw. der Anzahl der aktivierten Sensoren, d.h. die Aktivierungsmuster können einen, zwei, drei oder vier aktivierte Sensoren in unterschiedlicher Reihenfolge umfassen. Die 64 erfassbaren Aktivierungsmuster für die vier Sensoren des Gangwahlhebels 1 sind in Fig. 3 dargestellt. Die dort verwendeten Zahlen sind keine Bezugszeichen im eigentlichen Sinne, sondern sie stellen die zeitliche Reihenfolge dar, in der die einzelnen Sensoren S1 bis S4 aktiviert werden. Die Ziffer "1" steht dabei für die Aktivierung des Sensors S1, die Ziffer "2" für die Aktivierung des Sensors S2, die Ziffer "3" für die Aktivierung des Sensors S3 und die Ziffer "4" für die Aktivierung des Sensors S4. Somit entspricht beispielsweise das Aktivierungsmuster "2341" einem Szenario, bei dem zunächst der Sensor S2, dann der Sensor S3, anschließend der Sensor S4 und am Ende der Sensor S1 aktiviert wird. Das Ende einer Aktivierungsreihenfolge kann z.B. dadurch festgestellt werden, dass die Aktivierung eines bereits aktivierten Sensors beendet wird, was in der Regel dem Beginn des Loslassens des Gangwahlhebels entspricht. Zur Verdeutlichung ist im Baumdiagramm der Fig. 3 der Wurzelknoten mit 0 bezeichnet, was dem Zustand entspricht, in dem keiner der Sensoren aktiviert ist.

Durch eine geeignete Klassifikation der möglichen Aktivierungsmuster und deren Vergleich mit dem aktuell erfassten Muster können somit in geeigneter Weise unbeabsichtigte Bedienungen festgestellt werden. In einer Variante wird eine unbeabsichtigte Bedienung dann festgestellt, wenn nur einer der Sensoren S1 bis S4 aktiviert ist, was den Zuständen 1, 2, 3 und 4 in dem Baumdiagramm der Fig. 3 entspricht. Bei der Betätigung nur eines einzelnen Sensors kann in der Regel davon ausgegangen werden, dass lediglich versehentlich der Gangwahlhebel gestreift und hierdurch betätigt wurde. Ebenso können unerwünschte Betätigungen dann festgestellt werden, wenn innerhalb der Aktivierungsreihenfolge keiner der Sensoren S3 und S4 aktiviert wird, da in diesem Fall davon auszugehen ist, dass es sich um keine Berührung in der Form eines Umgreifens des Gangwahlhebels zum Einlegen eines Gangs handelt. Eine unerwünschte Betätigung kann insbesondere auch dann festgestellt werden, wenn das Aktivierungsmuster derart ausgestaltet ist, dass zunächst der Sensor S2 und erst anschließend der Sensor S1 aktiviert wird, denn diese Aktivierungsreihenfolge lässt darauf schließen, dass eine Umgreifbewegung zum Schalten des Gangwahlhebels nicht bestimmungsgemäß durch den Fahrer, sondern durch den Beifahrer gemacht wird. Eine Umgreifbewegung des Fahrers würde nämlich zunächst zur Aktivierung des Sensors S1 und erst anschließend zur Aktivierung des Sensors S2 führen.

Die soeben erläuterten Fälle für Aktivierungsreihenfolgen von unerwünschten Betätigungen sind lediglich beispielhaft und können je nach Anwendungsfall auch anders ausgestaltet sein. Zum Beispiel kann auch eine andere Anzahl bzw. Anordnung von Sensoren an dem Gangwahlhebel vorgesehen sein. Ferner kann das System auch dadurch verfeinert werden, dass in einem entsprechenden Speicher eine sehr große Anzahl von Aktivierungsmustern einer Vielzahl von Sensoren hinterlegt und geeignet kategorisiert ist, wodurch die Erkennungsgenauigkeit für unerwünschte Betätigungen verbessert wird.

Die im Vorangegangenen beschriebenen Ausführungsformen der Erfindung weisen eine Reihe von Vorteilen auf. Insbesondere kann das Sicherheitsrisiko bzw. Unfallrisiko durch unbedachte Bedienungen von sicherheitsrelevanten Bedienelementen, wie z.B. dem oben beschriebenen Gangwahlhebel, reduziert werden. Unbedachte Bedienungen umfassen dabei solche Bedienungen, die unbeabsichtigt bzw. durch den Beifahrer durchgeführt wurden und vom Fahrer zu spät bemerkt wurden. Im Besonderen kann dabei auf die derzeit am Gangwahlhebel vorgesehene Entriegelungstaste für den Fahrer verzichtet werden, da über die Erfassung der zeitlichen Reihenfolge der Aktivierung der Sensoren erkannt werden kann, ob die Fahrstufe bewusst vom Fahrer eingelegt wird. Hierdurch wird der Komfort bei der Verwendung des Gangwahlhebels für den Fahrer erhöht. Ferner kann die Erfindung kostengünstig durch die Verwendung von preiswerten kapazitiven Sensoren realisiert werden. Insbesondere wird keine aufwändige optische Beifahrerüberwachung benötigt, um durch den Beifahrer ausgeführte Betätigungen des Gangwahlhebels bzw. eines anderen Bedienelements zu erfassen.

## Patentansprüche

1. Verfahren zum Verarbeiten einer Betätigung eines Bedienelements (1) in einem Kraftfahrzeug, insbesondere eines Bedienhebels, wobei das Bedienelement (1) zumindest durch den Fahrer des Kraftfahrzeugs betätigbar ist und an dem Bedienelement (1) eine Mehrzahl von Sensoren (S1, S2, S3, S4) angeordnet ist, welche zumindest teilweise bei einer Betätigung des Bedienelements (1) aktiviert werden, wobei
- die zeitliche Reihenfolge der Aktivierung der Sensoren (S1, S2, S3, S4) bei der Betätigung des Bedienelements (1) erfasst wird und basierend auf der zeitlichen Reihenfolge bestimmt wird, ob eine unerwünschte Betätigung vorliegt, wobei unerwünschte Betätigungen unbeabsichtigte Betätigungen und/oder Betätigungen durch einen Beifahrer umfassen;
- im Falle einer unerwünschten Betätigung die Ausführung von einer oder mehreren, an die Betätigung des Bedienelements (1) gekoppelten Aktionen im Kraftfahrzeug blockiert wird.

2. Verfahren nach Anspruch 1, **dadurch gekennzeichnet, dass** die Mehrzahl von Sensoren (S1, S2, S3, S4) einen oder mehrere Annäherungssensoren umfasst, insbesondere einen oder mehrere kapazitive Sensoren.

3. Verfahren nach Anspruch 1 oder 2, **dadurch gekennzeichnet, dass** an dem Bedienelement zumindest vier Sensoren (S1, S2, S3, S4) angeordnet sind.

4. Verfahren nach einem der vorhergehenden Ansprüche, **dadurch gekennzeichnet, dass** eine Betätigung, bei der die Anzahl der aktivierten Sensoren (S1, S2, S3, S4) geringer als eine Mindestanzahl ist, eine unerwünschte Betätigung darstellt.

5. Verfahren nach einem der vorhergehenden Ansprüche, **dadurch gekennzeichnet, dass** der Bedienhebel zwischen Fahrerposition und Beifahrerposition angeordnet ist, insbesondere als Gangwahlhebel ausgebildet ist, wobei die an die Betätigung des Gangwahlhebels gekoppelte Aktion den Wechsel eines Gangs oder Fahrmodus umfasst.

6. Verfahren nach Anspruch 5, **dadurch gekennzeichnet, dass** die Mehrzahl von Sensoren (S1, S2, S3, S4) an dem Bedienhebel (1) folgende Sensoren umfasst:
- einen oder mehrere erste Sensoren (S1) an einer fahrerseitigen Flanke (101) des Bedienhebels (1);
- einen oder mehrere zweite Sensoren (S2) an einer beifahrerseitigen Flanke (102) des Bedienhebels (1);
- einen oder mehrere dritte Sensoren (S3) an einer mittleren Flanke (103) des Bedienhebels (1), welche zwischen der fahrerseitigen Flanke (101) und der beifahrerseitigen Flanke (102) verläuft.

7. Verfahren nach Anspruch 6, **dadurch gekennzeichnet, dass** die mittlere Flanke (103) eine aus der Fahrerposition verdeckte Rückseite des Bedienhebels (1) darstellt.

8. Verfahren nach Anspruch 6 oder 7, **dadurch gekennzeichnet, dass** eine zeitliche Reihenfolge der Aktivierung der Sensoren (S1, S2, S3, S4), gemäß der zuerst zumindest ein zweiter Sensor (S2), anschließend zumindest eine erster Sensor (S1) und schließlich zumindest ein dritter Sensor (S3) aktiviert wird, eine unerwünschte Betätigung darstellt.

9. Verfahren nach einem der Ansprüche 6 bis 8, **dadurch gekennzeichnet, dass** eine zeitliche Reihenfolge der Aktivierung der Sensoren (S1, S2, S3, S4), gemäß der kein dritter Sensor (S3) aktiviert wird oder gemäß der ausschließlich zumindest ein erster Sensor oder zumindest ein zweiter Sensor oder zumindest ein dritter Sensor aktiviert wird, eine unerwünschte Betätigung darstellt.

10. Verfahren nach einem der vorhergehende Ansprüche, **dadurch gekennzeichnet, dass** bei der Bestimmung, ob eine unerwünschte Betätigung vorliegt, die erfasste zeitliche Reihenfolge der Aktivierung der Sensoren (S1, S2, S3, S4) mit einer Mehrzahl von gespeicherten zeitlichen Reihenfolgen der Aktivierung von Sensoren verglichen wird, wobei die gespeicherten zeitlichen Reihenfolgen in unerwünschte und erlaubte Betätigungen klassifiziert sind, wobei basierend auf dem Vergleich die erfasste zeitliche Reihenfolge als unerwünschte Betätigung oder erlaubte Betätigung eingestuft wird.

11. Verfahren nach einem der vorhergehenden Ansprüche, **dadurch gekennzeichnet, dass** ein Sensor (S1, S2, S3, S4) der Mehrzahl von Sensoren S1, S2, S3, S4) erst dann aktiviert wird, wenn der Sensor (S1, S2, S3, S4) eine vorbestimmte Zeitspanne ein Signal sensiert.

12. Verfahren nach einem der vorhergehenden Ansprüche, **dadurch gekennzeichnet, dass** ein Ende einer zeitlichen Reihenfolge der Aktivierung der Sensoren (S1, S2, S3, S4) dann festgestellt wird, wenn die Aktivierung eines im Rahmen der Betätigung aktivierten Sensors (S1, S2, S3, S4) beendet wird.

13. Bedienelement für ein Kraftfahrzeug, insbesondere Bedienhebel, wobei das Bedienelement (1) zumindest durch den Fahrer des Kraftfahrzeugs betätigbar ist und an dem Bedienelement (1) eine Mehrzahl von Sensoren (S1, S2, S3, S4) angeordnet ist, welche zumindest teilweise bei einer Betätigung des Bedienelements (1) aktiviert werden, wobei
eine Einrichtung zum Verarbeiten einer Betätigung des Bedienelements (1) vorgesehen ist, welche derart ausgestaltet ist, dass
- die zeitliche Reihenfolge der Aktivierung der Sensoren (S1, S2, S3, S4) bei der Betätigung des Bedienelements (1) erfasst wird und basierend auf der zeitlichen Reihenfolge bestimmt wird, ob eine unerwünschte Betätigung vorliegt, wobei unerwünschte Betätigungen unbeabsichtigte Betätigungen und/oder Betätigungen durch einen Beifahrer umfassen;
- im Falle einer unerwünschten Betätigung die Ausführung von einer oder mehreren, an die Betätigung des Bedienelements (1) gekoppelten Aktionen im Kraftfahrzeug blockiert wird.

14. Bedienelement nach Anspruch 13, **dadurch gekennzeichnet, dass** mit dem Bedienelement ein Verfahren nach einem der Ansprüche 2 bis 12 durchführbar ist.

15. Kraftfahrzeug, **dadurch gekennzeichnet, dass** das Kraftfahrzeug ein Bedienelement nach Anspruch 13 oder 14 umfasst.

## Claims

1. A method for processing an actuation of an operating element (1) in a motor vehicle, more especially an operating lever, wherein the operating element (1) is actuatable at least by the driver of the motor vehicle and a plurality of sensors (S1, S2, S3, S4) is arranged on the operating element (1), said plurality of sensors being at least partially activated when the operating element (1) is actuated, wherein
- the time sequence of activation of the sensors (S1, S2, S3, S4) when the operating element (1) is actuated is detected and, on the basis of the time sequence, it is determined whether an undesired actuation is occurring, wherein undesired actuations comprise unintended actuations and/or actuations by a front-seat passenger; and
- in the event that it is determined that an undesired actuation is occurring, the implementation in the vehicle of one or more actions coupled to the actuation of the operating element (1) is blocked.

2. A method according to claim 1, **characterised in that** the plurality of sensors (S1, S2, S3, S4) comprises one or more proximity sensors, more especially one or more capacitive sensors.

3. A method according to claim 1 or 2, **characterised in that** at least four sensors (S1, S2, S3, S4) are arranged on the operating element.

4. A method according to any one of the preceding claims, **characterised in that** an actuation in which the number of activated sensors (S1, S2, S3, S4) is lower than a minimum number represents an undesired actuation.

5. A method according to any one of the preceding claims, **characterised in that** the operating lever is arranged between a driver position and a front-seat passenger position, more especially is formed as a gear selector lever, wherein the action coupled with the actuation of the gear selector lever comprises a change of gear or a change of driving mode.

6. A method according to claim 5, **characterised in that** the plurality of sensors (S1, S2, S3, S4) on the operating lever (1) comprises the following sensors:
- one or more first sensors (S1) on a driver-side flank (101) of the operating lever (1);
- one or more second sensors (S2) arranged on a front-passenger-side flank (102) of the operating lever (1); and
- one or more third sensors (S3) on a centre flank (103) of the operating lever (1), the centre flank extending between the driver-side flank (101) and the front-passenger-side flank (102).

7. A method according to claim 6, **characterised in that** the centre flank (103) constitutes a rear side of the operating lever (1), which rear side is hidden from the driver's position.

8. A method according to claim 6 or 7, **characterised in that** a time sequence of the activation of the sensors (S1, S2, S3, S4) in accordance with which at least one second sensor (S2) is firstly activated, followed by at least one first sensor (S1), and lastly at least one third sensor (S3) represents an undesired actuation.

9. A method according to any one of claims 6 to 8, **characterised in that** a time sequence of the activation of the sensors (S1, S2, S3, S4) in accordance with which no third sensor (S3) is activated or in accordance with which exclusively at least one first sensor or at least one second sensor or at least one third sensor is activated represents an undesired actuation.

10. A method according to any one of the preceding claims, **characterised in that,** when determining whether an undesired actuation is occurring, the detected time sequence of the activation of the sensors (S1, S2, S3, S4) is compared with a plurality of stored time sequences of the activation of sensors, wherein the stored time sequences are classified as undesired or permitted actuations, wherein the detected time sequence is classified as an undesired or permitted actuation on the basis of the comparison.

11. A method according to any one of the preceding claims, **characterised in that** a sensor (S1, S2, S3, S4) of the plurality of sensors (S1, S2, S3, S4) is activated only when the sensor (S1, S2, S3, S4) senses a signal over a predefined time period.

12. A method according to any one of the preceding claims, **characterised in that** an end of the time sequence of the activation of the sensors (S1, S2, S3, S4) is determined when the activation of a sensor (S1, S2, S3, S4) activated within the scope of the activation has been terminated.

13. An operating element for a motor vehicle, more especially an operating lever, wherein the operating element (1) is actuatable at least by a driver of the motor vehicle and a plurality of sensors (S1, S2, S3, S4) is arranged on the operating element (1), said sensors being at least partially activated during the actuation of the operating element (1), wherein
a device for processing an actuation of the operating element (1) is provided and is designed in such a way that
- the time sequence of the activation of the sensors (S1, S2, S3, S4) during the actuation of the operating element (1) is detected and, on the basis of the time sequence, it is determined whether an undesired actuation is occurring, wherein undesired actuations comprise unintended actuations and/or actuations by a front-seat passenger; and
- in the event that it is determined that an undesired actuation is occurring, the implementation in the vehicle of one or more actions coupled to the actuation of the operating element (1) is blocked.

14. An operating element according to claim 13, **characterised in that** a method according to any one of claims 2 to 12 can be carried out by the operating element.

15. A motor vehicle, **characterised in that** the motor vehicle comprises an operating element according to claim 13 or 14.

## Revendications

1. Procédé de traitement de l'actionnement d'un élément de manoeuvre (1) dans un véhicule, en particulier d'un levier de manoeuvre, l'élément de manoeuvre (1) pouvant être actionné au moins par le conducteur du véhicule, et sur l'élément de manoeuvre (1) étant installé un ensemble de capteurs (S1, S2, S3, S4) qui sont activés au moins partiellement lors d'un actionnement de l'élément de manoeuvre (1),
selon lequel,
- on capte la succession chronologique de l'activation des capteurs (S1, S2, S3, S4) lors de l'actionnement de l'élément de manoeuvre (1), et on détermine sur le fondement de la succession chronologique s'il y a actionnement indésirable, des actionnements indésirables étant des actionnements involontaires et/ou des actionnements par un passager,
- dans le cas d'un actionnement indésirable, la mise en oeuvre d'au moins un actionneur couplé à l'actionnement de l'élément de manoeuvre (1) dans le véhicule est bloqué.

2. Procédé conforme à la revendication 1,
**caractérisé en ce que**
l'ensemble de capteurs (S1, S2, S3, S4) comprend au moins un capteur de proximité, en particulier au moins un capteur capacitif.

3. Procédé conforme à la revendication 1 ou 2,
**caractérisé en ce que**
sur l'élément de manoeuvre sont montés au moins quatre capteurs (S1, S2, S3, S4).

4. Procédé conforme à l'une des revendications précédentes,
**caractérisé en ce qu'**
un actionnement dans lequel le nombre de capteurs (S1, S2, S3, S4) activé est inférieur à un nombre minimum correspond à un actionnement indésirable.

5. Procédé conforme à l'une des revendications précédentes,
**caractérisé en ce que**
le levier de manoeuvre est monté entre la place du conducteur et la place du passager, et est réalisé en particulier sous la forme d'un levier de changement de vitesse, l'action couplée à l'actionnement du levier de changement de vitesse étant un changement de vitesse ou de mode de déplacement.

6. Procédé conforme à la revendication 5,
**caractérisé en ce que**
l'ensemble de capteurs (S1, S2, S3, S4) situé sur le levier de manoeuvre (1) comprend les capteurs suivants :
- au moins un premier capteur (S1) situé sur le flanc (101) côté conducteur du levier de manoeuvre (1),
- au moins un second capteur (S2) situé sur le flanc côté passager (102) du levier de manoeuvre (1),
- au moins un troisième capteur (S3) situé sur le flanc médian (103) du levier de manoeuvre (1) qui s'étend entre le flanc (101) côté conducteur et le flanc (102) côté passager.

7. Procédé conforme à la revendication 6,
**caractérisé en ce que**
le flanc médian (103) correspond au côté arrière du levier de manoeuvre (1) caché à partir de la place du conducteur.

8. Procédé conforme à la revendication 6 ou 7,
**caractérisé en ce qu'**
une succession chronologique de l'activation des capteurs (S1, S2, S3, S4) selon laquelle le second capteur (S2) est tout d'abord activé puis le premier capteur (S1) et enfin le troisième capteur (S3) correspond à un actionnement indésirable.

9. Procédé conforme à l'une des revendications 6 à 8,
**caractérisé en ce que**
une succession chronologique de l'activation des capteurs (S1, S2, S3, S4) selon laquelle aucun troisième capteur (S3) n'est activé ou selon laquelle exclusivement au moins un premier capteur ou au moins un second capteur ou au moins un troisième capteur est activé correspond à un actionnement indésirable.

10. Procédé conforme à l'une des revendications précédentes,
**caractérisé en ce que**
lors de la détermination de la présence d'un actionnement indésirable, la succession chronologique détectée de l'activation des capteurs (S1, S2, S3, S4) est comparée à un ensemble de successions chronologiques enregistrées de l'activation de capteurs, et les successions chronologique enregistrées sont classées en actionnements indésirables ou autorisés, et sur le fondement de la comparaison, la succession chronologique détectée est classée en tant qu'actionnement indésirable ou en tant qu'actionnement autorisé.

11. Procédé conforme à l'une des revendications précédentes,
**caractérisé en ce qu'**
un capteur (S1, S2, S3, S4) de l'ensemble de capteurs (S1, S2, S3, S4) n'est activé que lorsque le capteur (S1, S2, S3, S4) détecte un signal pendant un laps de temps prédéfini.

12. Procédé conforme à l'une des revendications précédentes,
**caractérisé en ce que**
la fin de succession chronologique de l'activation des capteurs (S1, S2, S3, S4) est déterminée lorsque l'activation d'un capteur (S1, S2, S3, S4) activé dans le cadre de l'activation est achevée.

13. Elément de manoeuvre destiné à un véhicule, en particulier levier de manoeuvre, cet élément de manoeuvre (1) pouvant être actionné au moins par le conducteur du véhicule, et sur l'élément de manoeuvre (1) étant monté un ensemble de capteurs (S1, S2, S3, S4) qui sont activés au moins partiellement lors d'un actionnement de l'élément de manoeuvre (1), dans lequel,
il est prévu un dispositif de traitement d'un actionnement de l'élément de manoeuvre (1) qui est réalisé pour permettre :
de capter la succession chronologique de l'activation des capteurs (S1, S2, S3, S4) lors de l'actionnement de l'élément de manoeuvre (1), et de déterminer sur le fondement de cette succession chronologique s'il y a un actionnement indésirable, des actionnements indésirables étant des actionnements involontaires et/ou des actionnements par un passager, en cas d'actionnement indésirable, de bloquer dans le véhicule au moins une action couplée à l'actionnement de l'élément de manoeuvre (1).

14. Elément de manoeuvre conforme à la revendication 13,
caractérisé en qu'
il permet la mise en oeuvre d'un procédé conforme à l'une des revendications 2 à 12.

15. Véhicule **caractérisé en ce qu'**
il comporte un élément de manoeuvre conforme à la revendication 13 ou 14.
